# EUROPEAN PATENT APPLICATION

(11) **EP 0 680 129 A1**
(43) Date of publication of application: **02.11.1995**
(21) Application number: 95302765.3
(22) Date of filing: 25.04.1995
(51) Int. Cl.: H02H 7/08, H02P 1/32

(54) **Controlling start-up of electrically-powered equipment such as a compressor**

(30) Priority: 27.04.1994 GB 9408331
(71) Applicant: INGERSOLL-RAND COMPANY, Woodcliff Lake New Jersey 07675-8738 (US)
(72) Inventor: McClean, Christopher William, Sale, Cheshire MEE 4PT (GB)
(74) Representative: Feakins, Graham Allan

(57) **Abstract**

A method and device to control start-up of three-phase electrically-powered equipment such as a compressor having a drive output rotor shaft to avoid mechanical damage. The device is used to detect and measure rotor shaft speed during start-up to produce an output signal and feeding that output signal to an actuating means arranged to abort start-up in the event of failure of the rotor shaft to attain a specified speed, preferably if it has not been reached within a specified time.

Particular application is in star/delta starting of high starting load/torque electrical motors.

## Description

This invention relates to a method and apparatus for controlling start-up of electrically-powered equipment such as a compressor, which can be heavily loaded at start-up.

Electrically-powered compressors are often driven by a three-phase electric motor and start-up is achieved through a star connection or delta connection control.

With such start-up connections, as the control sequence progresses and the connections in a star or delta connector are made and unmade, it is known for reverse torque transients to occur. This is caused by a phase angle shift between the supply and the motor. This can result in a large current spike which will appear in the negative cycle, thus producing an opposing torque when the delta connection is made.

It has been found that such torques produce great strains on drive systems and the high impact loadings that result can exceed normal design parameters. For example, it has been known for drive couplings or drive gears to fail.

Normally star/delta starter change over is arranged to occur in a fixed time, and takes no account of actual motor speed. The said torque transients can occur if the motor is not up to speed. Therefore, fixed change over times are undesirable and may actually cause a problem.

According to one aspect of the present invention, there is provided a method, to avoid mechanical damage, of controlling start-up provided by a star/delta starter of three-phase, electrically-powered equipment having a drive output rotor shaft, the method comprising using a device that detects and measures rotor shaft speed during start-up to produce an output signal, characterised in that said output signal is fed to an actuating means arranged to abort start-up in the event of failure of said rotor shaft to attain a specified speed.

Preferably, the specified speed should be reached within a specified time.

According to another aspect of the present invention, there is provided a device, to avoid mechanical damage, to control start-up provided by a star/delta starter of three-phase, electrically-powered equipment having a drive output rotor shaft, the device including means to detect and measure rotor shaft speed during start-up and to produce an output signal and an actuating means, characterised by means to feed said output signal to said actuating means and said actuating means being arranged to abort start-up in the event of failure of said rotor shaft to attain a specified speed.

The invention has particular applicability to star/delta starting of high starting load/torque electrical motors such as used in compressors.

The device can be a tachometer or generator mounted on the drive output rotor shaft.

The device can be arranged to produce a voltage/current output signal to produce an opening or closing contact signal to the starter control of the motor, this output signal indicating the present rotational speed of the output rotor shaft.

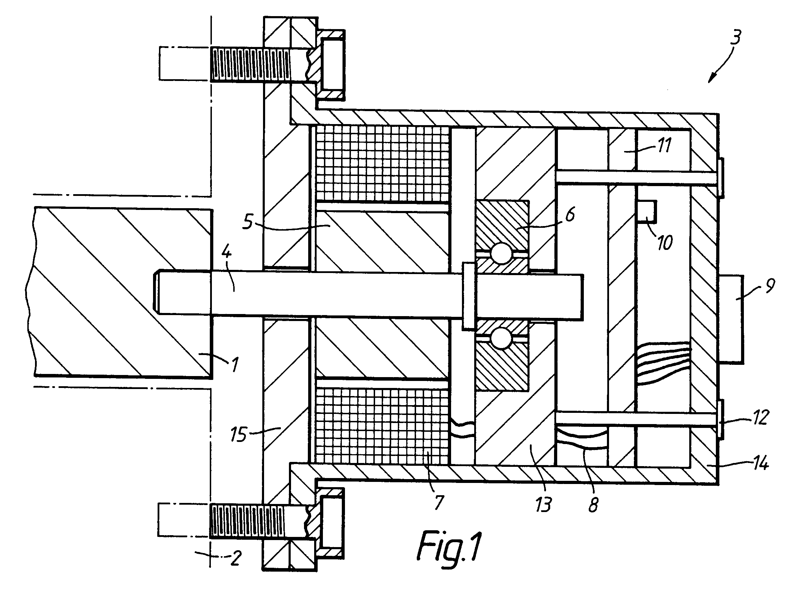

For a better understanding of the invention and to show how the same may be carried into effect, reference will now be made, by way of example, to the accompanying drawings, in which:-
Figure 1 is a diagrammatic sectional view of a drive output rotor shaft of an electrically-driven compressor and showing a device for detecting and measuring rotor shaft speed, and

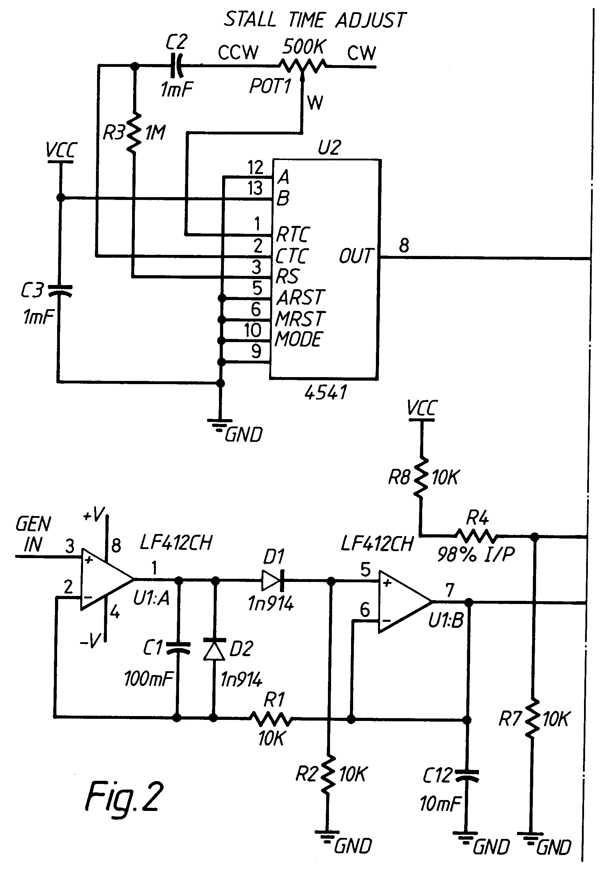

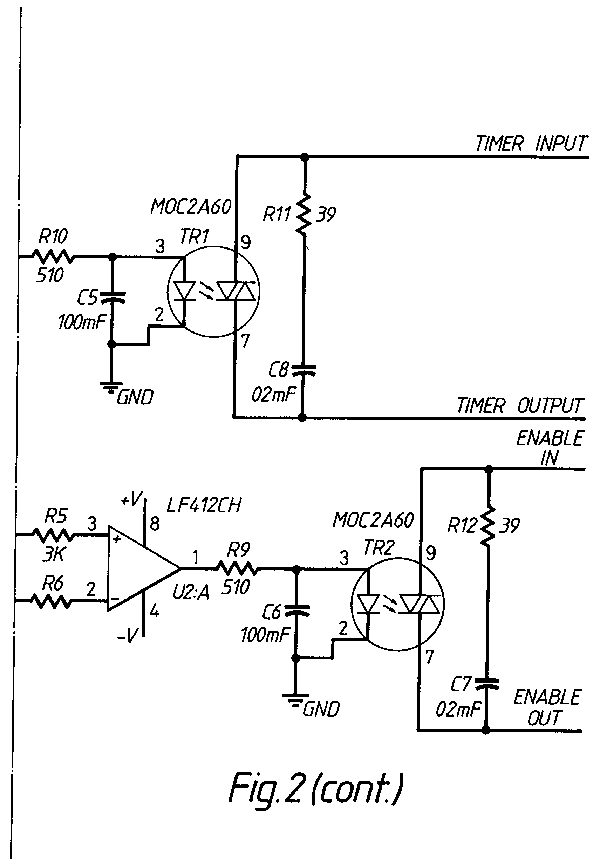

Figure 2 is a typical circuit diagram for putting the invention into effect.

Referring to the drawing, a motor driven drive output rotor shaft 1 of a compressor having a casing 2 is coupled to the device 3 for detecting and measuring rotor shaft speed.

In the example illustrated, the device 3 is fitted on the casing 2 and is in the form of a tachometer or generator with its own rotor shaft 4 coupled to the rotor shaft 1, surrounded by rotor magnets 5 and mounted in a bearing 6. Stator windings 7 surround the magnets 5 and winding outputs 8 are connected to the windings to transmit the output signal from the tachometer or generator to an actuating means in the form of a control board 11 which uses an integrator circuit arranged to abort start-up in the event of failure of the rotor shaft 1 to attain a specified speed within a specified time.

Also diagrammatically illustrated is a multipin connector 9 for connecting the outputs to the starter and power supply.

It will be appreciated that, as shown, the tachometer or generator 3 is located at the back of the drive motor and this facilitates retrofitting such a device to existing equipment.

In use, the output from the tachometer or generator 3, which is governed by the speed of the drive shaft 1, causes a change in the signal to the integrator circuit. The output of the integrator circuit is arranged to drive the switching of the start/delta control. For example, the switched connections can be arranged to change at fifty percent, seventy-five percent and one hundred percent of the output voltage range, this being proportional to the speed of the rotor shaft 1.

The switching outputs themselves can be relay operated or operated by a semi-conductor arrangement.

Start-up is aborted if a specified speed is not reached in a specified time. For example, if fifty percent speed is not reached, e.g. within 5-10 seconds then start-up is aborted to prevent mechanical damage to the compressor.

The device can be adapted for use with motors with different running speeds, as will be the case with two-pole/four-pole motors by changing switch position 10.

The drawing also illustrates anti-vibration mounting pins 12 for the control board 11, a bearing housing 13, an outer casing 14 and an end cover 15 for the device.

The device enables the fixed time change over interval of conventional star/delta starters to be replaced.

## Claims

1. A method, to avoid mechanical damage, of controlling start-up provided by a star/delta starter of three-phase, electrically-powered equipment having a drive output rotor shaft, the method comprising using a device that detects and measures rotor shaft speed during start-up to produce an output signal, characterised in that said output signal is fed to an actuating means arranged to abort start-up in the event of failure of said rotor shaft to attain a specified speed.

2. A method according to claim 1, wherein said specified speed must be attained within a specified time.

3. A method according to claim 1 or 2, wherein said device that detects and measures rotor shaft speed is a tachometer or generator mounted on said drive output rotor shaft.

4. A method according to claim 1, 2 or 3, wherein said device is arranged to change over starter winding connections from star to delta winding connections when said specified speed has been attained.

5. A method according to any one of the preceding claims, and being used in controlling start-up of an electrically-powered compressor.

6. A device, to avoid mechanical damage, to control start-up provided by a star/delta starter of three-phase, electrically-powered equipment having a drive output rotor shaft, the device including means to detect and measure rotor shaft speed during start-up and to produce an output signal and an actuating means, characterised by means to feed said output signal to said actuating means and said actuating means being arranged to abort start-up in the event of failure of said rotor shaft to attain a specified speed.

7. A device according to claim 6, wherein said device that detects and measures rotor shaft speed is a tachometer or generator mounted on said drive output rotor shaft.

8. A device according to claim 6 or 7, wherein said device is arranged to change over starter winding connections from star to delta winding connections when said specified speed has been attained.

9. A device according to claim 6, 7 or 8 and being used in controlling start-up of an electrically-powered compressor.
